(19) Europäisches Patentamt
European Patent Office
Office européen des brevets

(11) **EP 3 971 635 A1**

(12) **EUROPEAN PATENT APPLICATION**

(43) Date of publication:
**23.03.2022 Bulletin 2022/12**

(21) Application number: **20306063.7**

(22) Date of filing: **18.09.2020**

(51) International Patent Classification (IPC):
**G02C 7/10** *(2006.01)*  **G02C 7/02** *(2006.01)*
**G02B 5/23** *(2006.01)*  **G02B 5/22** *(2006.01)*

(52) Cooperative Patent Classification (CPC):
**G02C 7/102; G02B 5/223; G02B 5/23; G02C 7/02; G02C 7/104; G02C 7/108;** G02C 2202/16

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ESSILOR INTERNATIONAL**
**94220 Charenton-Le-Pont (FR)**

(72) Inventors:
• **FRENCH, Elliot**
  **DALLAS, TX Texas 75234 (US)**
• **BALASUBRAMANIAN, Srinivasan**
  **DALLAS, TX Texas 75234 (US)**
• **CHIU, Hao-Wen**
  **DALLAS, TX Texas 75234 (US)**

(74) Representative: **Jacobacci Coralis Harle**
**32, rue de l'Arcade**
**75008 Paris (FR)**

(54) **VARIABLE TRANSMISSION COLOR ENHANCING LENS**

(57) A light filtering element, includes: at least one layer, including a first narrowband dye, the first narrowband dye including a first narrowband dye peak absorbance wavelength with a first narrowband dye bandwidth and a first narrowband dye absorbance area ratio; and a first broadband dye, the first broadband dye including a first broadband dye peak absorbance wavelength with a first broadband dye bandwidth and a first broadband dye absorbance area ratio, wherein the first narrowband dye is a photochromic dye or a fixed tint dye, and the first broadband dye is a photochromic dye or a fixed tint dye.

**Process Flow for Making Photochromic CE Lens**

FIG. 3

EP 3 971 635 A1

**Description**

FIELD OF THE INVENTION

The present disclosure relates to variable transmission lenses with color contrast enhancement. Variable transmission is achieved with the help of a photochromic layer that can be activated by UV light.

BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Color enhancement in lenses can filter predetermined wavelengths of visible light prior to reaching a user's eyes in order to facilitate a view that is more aesthetically pleasing, less eye-strain-inducing, or a combination of both. Photochromic lenses in which the transmission can change vary anywhere from a light to clear lens, to a dark sunglasses lens. However, color enhancement in combination with photochromic sunglasses has been very limited or resulted in limited color enhancement that is mainly produced via the decreased transmission of light overall. Furthermore, sunglasses typically worn by users include very dark lenses that users wear on bright sunny days. A user with said sunglasses can experience a diminished viewing experience when transitioning between bright light conditions to shaded or low-light conditions. In particular, the transmission reduction will remain the same while the amount of light available is lower, which results in the user's eyes receiving less light and thus decreased vision. Thus, a lens combining color enhancement and variable transmission is desired.

Aspects of the invention may address some of the above-described shortcomings in the art, particularly using solutions set forth in the claims.

SUMMARY

The present disclosure relates to a light filtering element, including: at least one layer, including a first narrowband dye, the first narrowband dye including a first narrowband dye peak absorbance wavelength with a first narrowband dye bandwidth and a first narrowband dye absorbance area ratio; and a first broadband dye, the first broadband dye including a first broadband dye peak absorbance wavelength with a first broadband dye bandwidth and a first broadband dye absorbance area ratio, wherein the first narrowband dye is a photochromic dye or a fixed tint dye, and the first broadband dye is a photochromic dye or a fixed tint dye .

When the first narrowband dye or the first broadband dye is a photochromic dye, the photochromic dye may be configured to adjust a transmission of the at least one layer between at least two transmission states in response to a change in detected luminance.

A lens may be optically integrated with the at least one layer. The at least one layer and the lens may be attached to one another via an adhesive, or the at least one layer and the lens are attached to one another via injection molding.

Note that this summary section does not specify every embodiment and/or incrementally novel aspect of the present disclosure or claimed invention. Instead, this summary only provides a preliminary discussion of different embodiments and corresponding points of novelty. For additional details and/or possible perspectives of the invention and embodiments, the reader is directed to the Detailed Description section and corresponding figures of the present disclosure as further discussed below.

BRIEF DESCRIPTION OF THE DRAWINGS

Various embodiments of this disclosure that are proposed as examples will be described in detail with reference to the following figures, wherein:

FIG. 1A is a schematic of a molding device, within the scope of the present disclosure.
FIG. 1B is a schematic of an injection over-molding device, within the scope of the present disclosure.
FIG. 2 is a schematic of several layer combinations for a photochromic color enhancing (PhCh CE) wafer, within the scope of the present disclosure.
FIG. 3 is a schematic of several methods for integrating a PhCh CE wafer onto a lens, within the scope of the present disclosure.
FIGs. 4A, 4B, 4C, 4D, and 4E are transmission spectra generated based on the simulation data of Examples 1a, 1b, 2, 3, and 4, within the scope of the present disclosure.

FIG. 5 shows a transmission spectrum for a composite lens fabricated using a PhCh CE wafer according to Example 5a, within the scope of the present disclosure.

FIG. 6 shows a graph of the activated optical density for a photochromic coating, within the scope of the present disclosure.

FIG. 7 shows a transmission spectrum for a composite lens fabricated using a PhCh CE wafer according to Example 5b, within the scope of the present disclosure.

FIG. 8 shows an extinction profile for simulated dyes, within the scope of the present disclosure.

FIG. 9 shows a transmission spectrum for a composite lens fabricated using a PhCh CE wafer according to Example 6, within the scope of the present disclosure.

## DETAILED DESCRIPTION

The following disclosure provides many different variations, or examples, for implementing different features of the provided subject matter, which are combinable in any permutation unless described otherwise. Specific examples of components and arrangements are described below to simplify the present disclosure. These are, of course, merely examples and are not intended to be limiting, nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present invention can be embodied and viewed in many different ways.

A combination of color contrast enhancement and photochromism in a lens is described herein. The color enhancing photochromic lens can be fabricated via myriad processes to produce a lens that filters predetermined wavelength ranges of light with variable broadband transmission based on a received level of incident light.

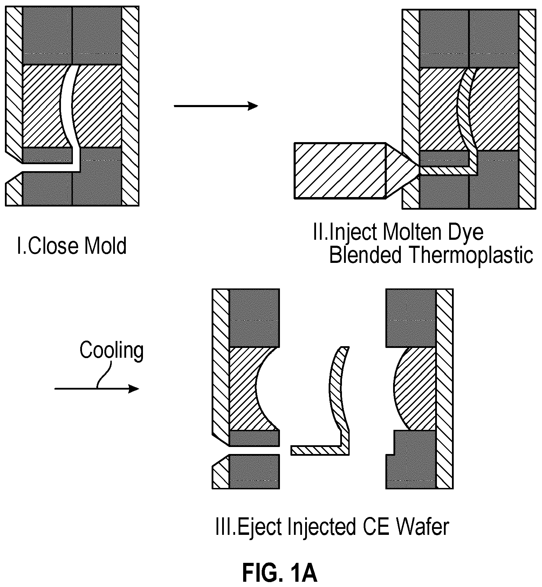

FIG. 1A shows a schematic of an exemplary molding device, useful within the scope of the present disclosure. The molding device can include a first mold side, a second mold side, a concave mold insert, and a convex mold insert. The first mold side and the second mold side can each include a hollow portion, wherein the concave mold insert and the convex mold insert can be removeably disposed therein. As shown in FIG. 1A, the first mold side including the concave mold insert can be configured to couple with the second mold side including the convex mold insert. Upon coupling, the concave mold insert and the convex mold insert can form a cavity connected to a hollow line formed by the coupling of the first and second mold sides. The line can be configured to receive a polymer, for example, via a screw feeder or similar device. The polymer can be injected into the cavity and formed into the shape of the cavity to produce an article, such as a color enhancing (CE) wafer.

The CE wafer can include a first narrowband dye and a first broadband dye. The first narrowband dye can include a first narrowband dye peak absorbance wavelength with a first narrowband dye bandwidth and a first narrowband dye absorbance area ratio. The first broadband dye can include a first broadband dye peak absorbance wavelength with a first broadband dye bandwidth and a first broadband dye absorbance area ratio.

In an embodiment, the polymer injected to fabricate the CE wafer can be prepared by first tumbling several dyes together, such as the first narrowband dye and the first broadband dye, followed by melt compounding the blend of the several dyes with a twin screw extruder fitted with a strand dye. The several dyes can include, in a non-limiting example, Solvent Orange 60, Solvent Red 11, Solvent Violet 36, Solvent Green 3, Epolight 5841 and Epolight 5819, mixed with polycarbonate (PC) resin. The blended strand coming out of the die can be continuously cooled with a water trough and fed into a pelletizer. Subsequently, the colored PC pellets can be injection molded into the molding device to a prescribed base to produce the CE wafer. For example, the CE wafer can be 0.5 to 2, or 0.6 to 1.8, or 0.75 to 1.5, or 0.9 to 1.25, or 1.1 mm thick.

The first narrowband dye can be configured to filter at a specific wavelength within a more narrow range of wavelengths, for example peaking near 500 nm, 580 nm, or both. The first broadband dye can be a dye configured to reflect a wide range of wavelengths and adjust the red, green and blue regions of the visible spectrum evenly to a total transmission (%Tv) target. Notably, myriad dyes can be selected for the first narrowband dye and the first broadband dye to produce a polymer with a predetermined desired transmission spectrum (or corresponding absorbance spectrum). Furthermore, the polymer can include additional dyes if additional light filtration properties are desired, such as a second narrowband dye and a second broadband dye. Of the aforementioned example dyes, Epolight 5841 & Epolight 5819 can be the first narrowband dye and the second narrowband dye, and solvent orange 60, solvent green 3, solvent red 11, and solvent violet 36 can be selected from for the first broadband dye and the second broadband dye. The PC resins can be resins with a higher melt flow index to facilitate injection molding at lower temperatures to help preserve thermal degradation of the first narrowband dye or the first broadband dye.

The CE wafer can alternatively or also be fabricated by extruding the polymer into a film, followed by die cutting and thermoforming the cut polymer film into the CE wafer with a predetermined curvature.

Subsequently, a first photochromic dye can be applied via a spin-coating or imbibition process to the CE wafer to produce a color enhancing photochromic wafer 200. The first photochromic dye can be configured to adjust a transmission of the completed lens between at least two transmission states in response to a change in detected luminance. For example, the at least two transmission states can include a first transmission state and a second transmission state. A first transmission state of the at least two transmission state can include a first transmission value and a second transmission state of the at least two transmission states can include a second transmission value, the second transmission value being larger than the first transmission value. That is, in response to a high detected luminance, the first photochromic dye adjusts to the first transmission state of the at least two transmission states, and in response to a low detected luminance, the first photochromic dye adjusts to the second transmission state of the at least two transmission states. In one example, the high detected luminance state can be a sunny environment that activates the first photochromic dye to reduce transmission of light, while the low detected luminance can be a shaded environment that deactivates or un-activates the first photochromic dye to allow increased transmission of light.

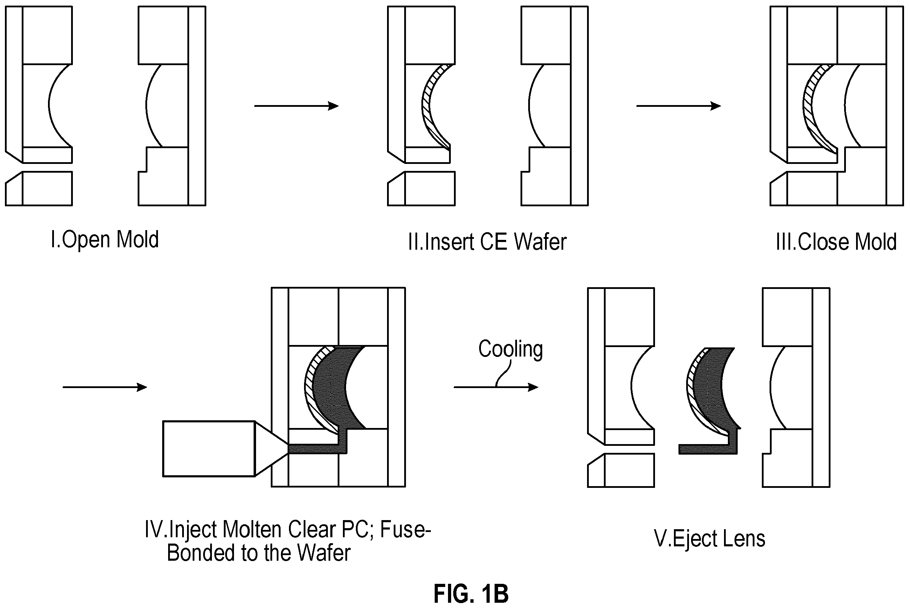

FIG. 1B shows a schematic of an exemplary injection over-molding device, useful within the scope of the present disclosure. In an embodiment, the CE wafers can then be molded to a convex side of a semi-finished (SF) lens using a standard SF wafer over-molding process. For thermosets, the CE wafer can be integrated inside the lens using a method similar to the polar thermoset casting process. Alternatively, the CE wafer can be laminated onto the convex side of the SF lens. Again, the first photochromic dye can be applied via a spin-coating or imbibition process to produce the photochromic color enhancing (PhCh CE) wafer 200.

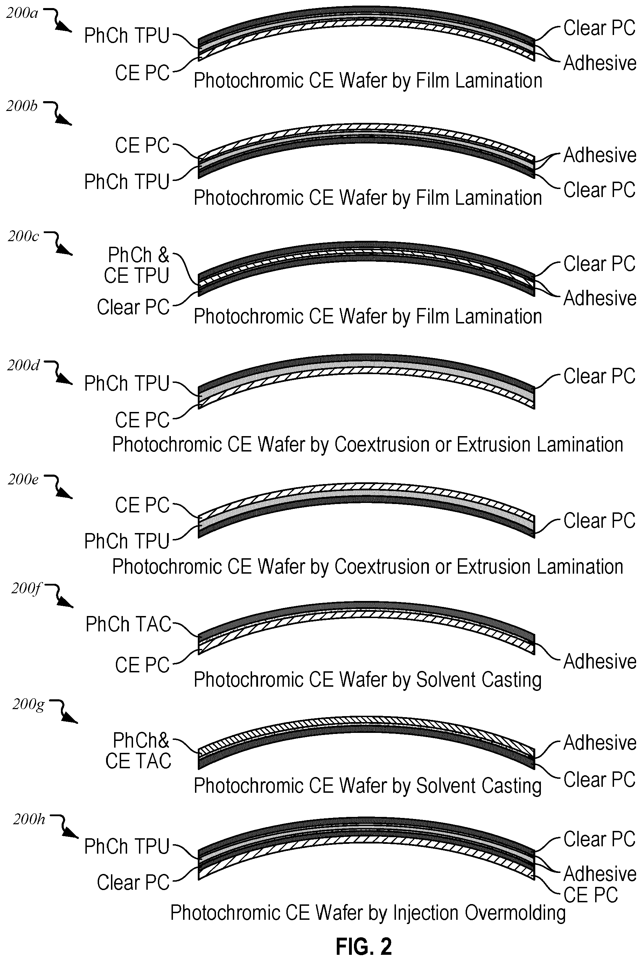

FIG. 2 shows a schematic of several layer exemplary combinations for the PhCh CE wafer 200, within the scope of the present disclosure. In an embodiment, several methods can be used to produce the PhCh CE wafer 200. In brief, the fabrication method can start with a single layer film by solvent casting or extrusion, a multilayer laminate by co-extrusion, an extrusion-lamination, or a film-lamination. The films or laminates can be cut into round wafers then thermoformed to specific curvatures. Alternatively, injection over-molding technique can be used to add a CE layer onto a photochromic wafer.

As shown, a PhCh CE wafer 200a can include a clear PC layer as a convex surface adhered to a middle PhCh layer (via an adhesive), and the middle PhCh layer can be adhered to a CE layer (via the adhesive) as a concave surface, wherein all layers are fabricated via film lamination. A PhCh CE wafer 200b can include a CE layer as the convex surface adhered to a middle PhCh layer, and the middle PhCh layer can be adhered to a clear PC layer as the concave surface, wherein all layers are fabricated via film lamination. A PhCh CE wafer 200c can include a clear PC layer as the convex surface and the concave surface adhered to a combined PhCh and CE layer as the middle layer, wherein all layers are fabricated via film lamination.

A PhCh CE wafer 200d can include a clear PC layer as the convex surface, a middle PhCh layer, and a CE layer as the concave surface, wherein all layers are attached to each other via coextrusion or extrusion lamination. A PhCh CE wafer 200e can include a CE layer as the convex surface, a middle PhCh layer, and a clear PC layer as the concave surface, wherein all layers are attached to each other via coextrusion or extrusion lamination.

A PhCh CE wafer 200f can include a triacetate (TAC) PhCh layer as the convex surface via solvent casting adhered to a CE layer as the concave surface, wherein all layers are attached to each other via film lamination. A PhCh CE wafer 200g can include a TAC PhCh and CE layer as the convex surface via solvent casting adhered to a clear PC layer as the concave surface, wherein all layers are attached to each other via film lamination.

A PhCh CE wafer 200h can include a clear PC layer as the convex surface and the concave surface adhered to a PhCh layer as the middle layer, wherein all layers are fabricated via coextrusion or extrusion lamination. Subsequently, a CE layer is injection over-molded to the concave clear PC layer.

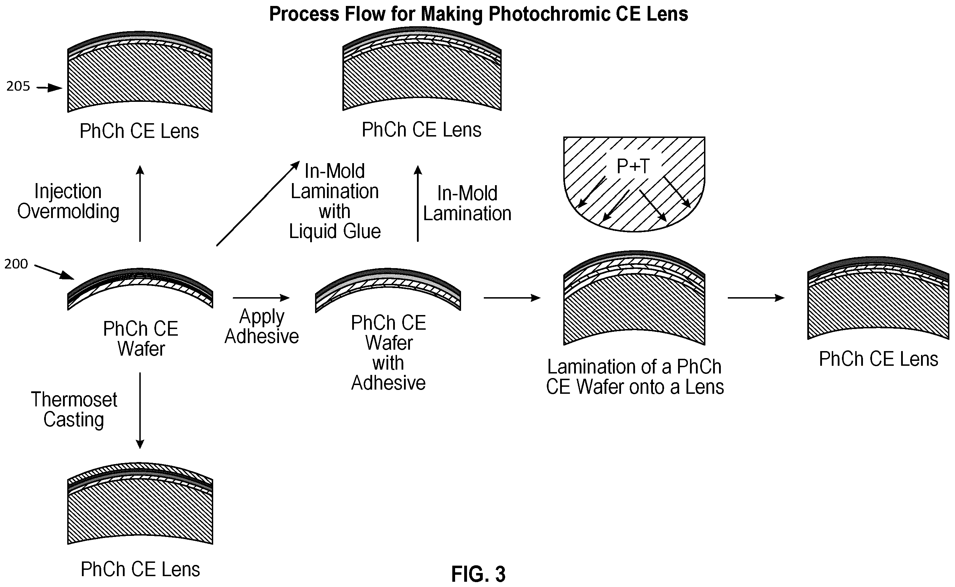

FIG. 3 shows a schematic of several methods for integrating the PhCh CE wafer 200 onto a lens, within the scope of the present disclosure. As shown, the PhCh CE wafer 200 can be injection over-molded to a lens 205, thermoset cast onto the lens 205, laminated to the lens 205 via an adhesive under the application of a heated press, or laminated in a mold (with an adhesive).

As described herein, methods including simulations can be utilized to determine the blend of dyes, e.g., at least 2, 3, 4, or 5 dyes, though generally fewer than 10, 9, or 8 dyes, to produce a desired transmission spectrum. The blend of dyes can include a combination of at least one narrowband dye and at least one broadband dye. The blend of dyes can impart color contrast enhancement in both the activated (i.e. the first transmission state) and the unactivated (i.e. the second transmission state) photochromic states.

Color enhancement can be achieved by having selective light attenuation in certain wavelength regions relative to other wavelength regions. In general, it is desired to filter out the cross-over blue-green (BG) light and the yellow (Y) light regions of the visible spectrum in between the primary colors of red, blue, and green. Notably, a user's eyes can still adapt to the filtered light and "see" those regions, but importantly, the primary colors appear more pronounced or intense. This provides the user with a more enhanced overall field of colors. It is desired to maintain this suppression of the BG and Y light in the PhCh CE wafer 200 as the user moves between different lighting conditions that may affect the overall level of transmission based on the detected luminance.

Color enhancement can be quantified by using a model developed by the International Commission on Illumination called CIECAM02, see *International Commission on Illumination. A Color Appearance Model For Color Management Systems: CIECAM02. CIE 159:2004. CIE Central Bureau, 2004.* In particular, a Chroma (C) value can be calculated based on spectral data. The spectral data can be the product of an object's spectral reflectance with a filter's spectral transmission. The object color can be any color to calculate the difference in C, with and without a filter, for that particular color's spectral data. For this calculation, the C value for 18 specific colors covering a wide range of colors can be calculated with and without the filter. The spectral reflectance of these 18 colors were intended to mimic those of natural objects, for example, human skin, foliage, and flowers; and primary colors such as red, green, blue, yellow, magenta and cyan. The percentage change in C (%ΔC from no filter) for each of the 18 colors can be give as:

$$\%\Delta C_{from\ no\ filter} = \frac{C_{with\ filter} - C_{no\ filter}}{C_{no\ filter}} \times 100 \,.$$

The calculations can be adjusted to simulate outdoor brightness levels. For example, luminance values of 20,000 Lux can be used for sunny environments and 100 Lux for shaded environments. This can be abbreviated as "C20K" and "C100," respectively. The 18 different %ΔC values for each color can then be averaged to calculate an average change called %ΔC$_{avg}$ from no filter.

The amount of attenuation (R) at a wavelength relative to other wavelengths can be calculated by taking the quotient of the transmission at the wavelength of interest divided by the total transmission (%Tv). For example, the amount of attenuation at 440 nm can be given as R$_{440nm}$ = T$_{440nm}$/T$_v$. Similarly, the amount of attenuation in the BG light region, at 540 nm, in the Y light region, and at 640 nm can be given as R$_{BG}$ = T$_{BG}$ / T$_v$; R$_{540nm}$ = T$_{540nm}$/T$_v$; R$_Y$ = T$_Y$/T$_v$; and R$_{640nm}$ = T$_{640nm}$/T$_v$, respectively, where T$_{BG}$ is the transmission peak in the blue-green light region with a range of approximately 480 nm to 510 nm and T$_Y$ is the transmission peak in the yellow light region with a range of approximately 565 nm to 595 nm. Lower values of R are desired for the BG and Y range compared to 440 nm, 540 nm, and 640 nm because color enhancement increases as the value of R$_{BG}$ and R$_Y$ decreases. Furthermore, the PhCh CE wafer 200 can be designed to have a R value greater than 0.20 to be driving legal.

In an embodiment, when the first narrowband dye is a fixed tint dye, the ratio of the first narrowband dye peak transmission to the first transmission value (e.g. T498/[Activated Tv], as described below) is less than or equal to 0.6, or 0.1 to 0.5, or preferably, 0.15 to 0.45. In an embodiment, when the first narrowband dye is a fixed tint dye, the ratio of the first narrowband dye peak transmission to the second transmission value (e.g. T498/[Unactivated Tv], as described below) is less than or equal to 0.6, or 0.1 to 0.5, or preferably, 0.15 to 0.45. The first transmission value of the first transmission state can in the range of 8 to 18, 10 to 16, or 11 to 15%. The second transmission value of the second transmission state can be in the range of 20 to 65, 25 to 60, 30 to 50, or 33 to 45%.

In an embodiment, when the first narrowband dye is a photochromic dye, the ratio of the first narrowband dye peak transmission to the first transmission value (e.g. T498/[Activated Tv], as described below) is less than or equal to 0.6, or 0.1 to 0.5, or preferably, 0.15 to 0.45. In an embodiment, when the first narrowband dye is a photochromic dye, the ratio of the first narrowband dye peak transmission to the second transmission value (e.g. T498/[Unactivated Tv], as described below) is in the range of 0.5 to 1.2, or 0.8 to 1.1, or preferably, 0.9 to 1.0. The first transmission value of the first transmission state can in the range of 8% to 18%. The second transmission value of the second transmission state can be in the range of 20% to 90%.

As described herein, the following examples describe simulation results for theoretical compositions of the PhCh CE wafer 200 and experimental results for the PhCh CE wafer 200 manufactured to the specifications described. Examples 1a, 1b, 2, 3 and 4 describe simulated properties of a lens to demonstrate the impact on total transmission and CE properties at various PhCh layer activation levels. Notably, combining fixed tint narrowband dyes with broadband photochromic dyes provides the highest levels of color enhancement at all activation levels, but other combinations are theorized and tested to arrive at the aforementioned conclusion. Example 5a demonstrates experimental properties measured for the PhCh CE wafer 200 combined with the lens 205. Example 5b describes simulated properties of a lens to push the unactivated %Tv range into category 1. Example 6 describes simulated properties of a lens using theoretical fixed tint narrow band dyes to increase the unactivated %Tv range from 60% Tv (12% ΔC) unactivated to 12% Tv (15% ΔC) activated. Note that category 4 refers to transmission below 8%, category 3 is transmission between 8% and 18%, category 2 is transmission between 18% to 43%, and category 1 is transmission between 43% to 75%.

EXAMPLES

EXAMPLES 1a, 1b, 2, 3, and 4 - Table 1 shows that the quotient of minimum transmission divided by Tv can be maintained at a constant 0.20 for all activation levels (e.g. the first transmission state, the second transmission stated, etc.) by incorporating fixed tint narrow band dyes with broadband photochromic dyes. If instead the narrow band dyes are photochromic, then the value of the quotient will increase as the lens deactivates, thereby diminishing color enhancement properties upon deactivation.

**Table 1**

|  |  | Example 1a | Example 1b | Example 2 | Example 3 | Example 4 |
|---|---|---|---|---|---|---|
| Narrow band Dyes | | Photochromic | Fixed & Photochromic | Photochromic | Photochromic | Fixed |
| Broadband Dyes | | None | Photochromic | Photochromic | Fixed | Photochromic |
| Activation = 0% | %Tv | 88% | 81% | 88% | 14% | 65% |
|  | Tmin/Tv | 1.00 | 0.74 | 1.00 | 1.00 | 0.20 |
|  | %ΔC100_{avg} (from no filter) | 0% | 2.2% | 0% | -4% | 9.7% |
| Activation = 50% | %Tv | 80% | 47% | 29% | 11.4% | 26% |
|  | Tmin/Tv | 0.68 | 0.54 | 0.46 | 0.46 | 0.20 |
|  | %ΔC100_{avg} (from no filter) | 2.8% | 3.8% | 4.0% | 1.4% | 8.0% |
| Activation = 80% | %Tv | 71% | 21% | 15% | 10.5% | 15% |
|  | Tmin/Tv | 0.36 | 0.32 | 0.28 | 0.28 | 0.20 |
|  | %ΔC20K_{avg} (from no filter) | 7.0% | 6.8% | 7.1% | 6.5% | 8.6% |
| Activation = 100% | %Tv | 65% | 10% | 10% | 10% | 10% |
|  | Tmin/Tv | 0.20 | 0.20 | 0.20 | 0.20 | 0.20 |
|  | %ΔC20K_{avg} (from no filter) | 10% | 7.9% | 8.0% | 8.0% | 8.0% |

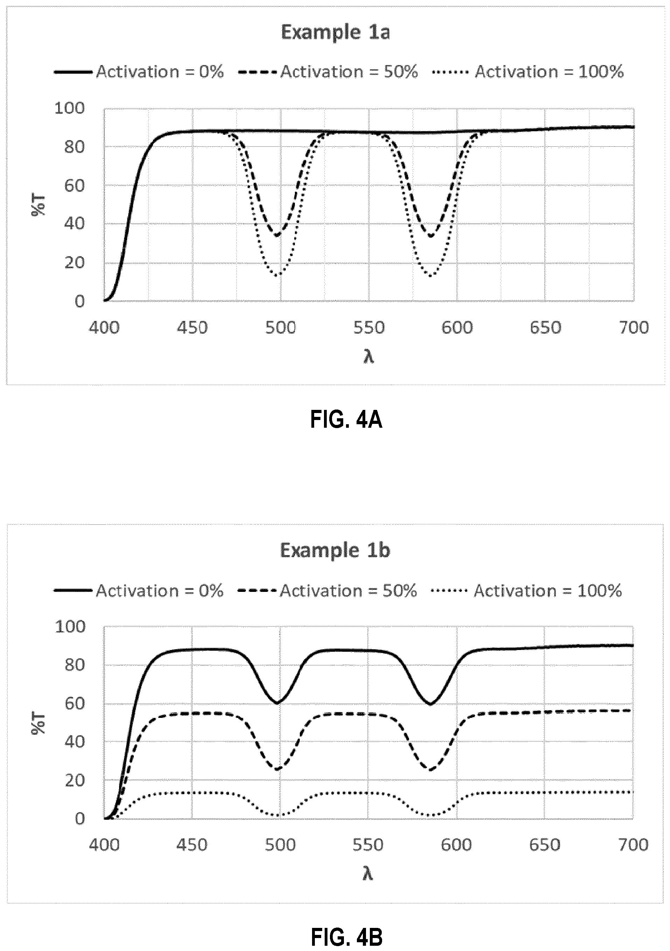

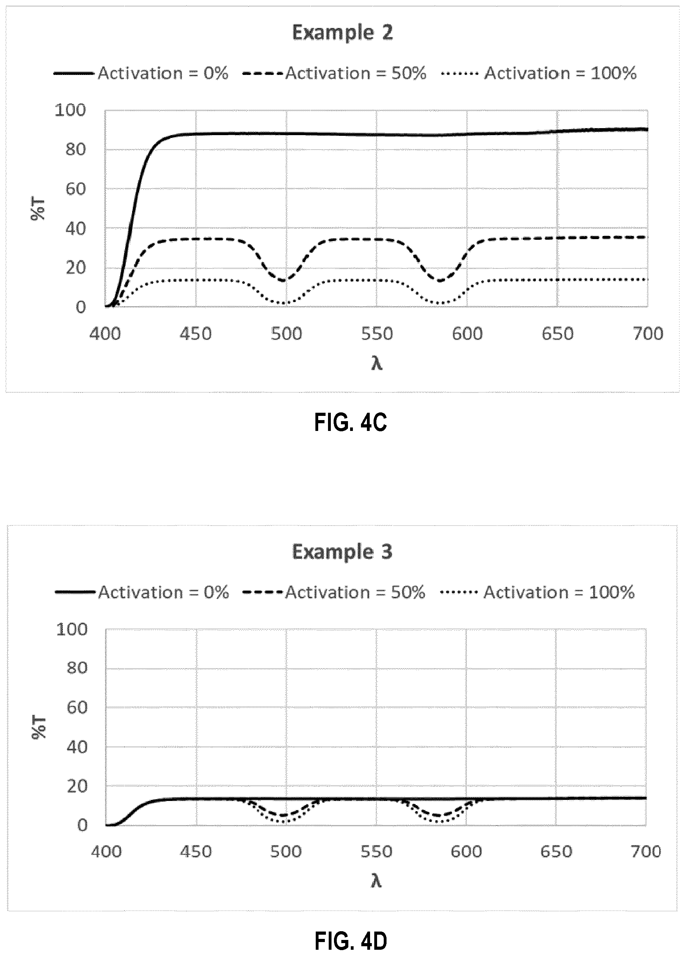

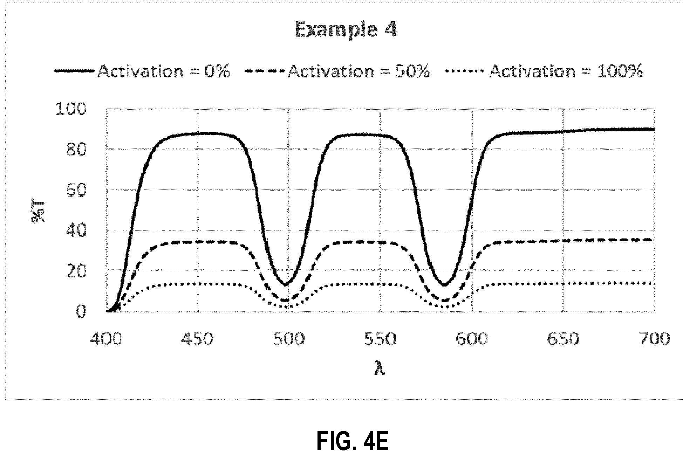

FIGs. 4A, 4B, 4C, 4D, and 4E are transmission spectra generated based on the simulation data of Examples 1a, 1b, 2, 3, and 4, according to an embodiment of the present disclosure. For these simulations, the broadband component was modeled assuming a completely flat transmission line, meaning light attenuation is even at all wavelengths. This represents the broadest dye in theory and is termed here as a "perfectly broad" dye. The narrowband components were modeled to follow an exponential like extinction with the bandwidth, also known as the full-width-half-max (FWHM), set to 22nm. The model dye's absorptivity was set linear to the activation level if it was photochromic.

Example 1a shows the use of narrowband photochromic dyes. In order to meet specifications, a concentration is set such that when those photochromic dyes are fully activated, a total transmission of 65% will result, but the Tmin/Tv will be 0.2, which is needed for a legal driving specification. That is, the value of Tmin/Tv cannot be less than 0.2. Thus, Example 1a, using narrowband photochromic dyes only, is not going to provide the desired composite lens.

Example 1B uses a combination of fixed tint and photochromic for narrowband dyes, and for broadband all photochromic dyes. This leads to an improvement where transmission will range from 81% to 10%, but as the composite lens becomes unactivated, color enhancement degrades.

Example 4 provides the best results in terms of color enhancement at all activation levels, and a good range for transmission that goes from 65% at the high end down to 10%. As such, Example 4 represents an optimal case where color enhancement is high for all activation levels. Example 4 includes a narrowband dye that is a fixed tint, and a broadband dye that is photochromic.

EXAMPLE 5a - The PhCh CE wafer 200 and the lens 205 were fabricated according to Table 2 to produce a composite lens. It was noted that the narrowband dyes (e.g. the first narrowband dye, the second narrowband dye, etc.) used imparted residual color. For this reason, broadband fixed tint dyes (e.g. the first broadband dye, the second broadband dye, etc.) were added to neutralize the residual color and provide precise color tuning for the activated and unactivated states of the lens. The PhCh CE wafer 200 having a %Tv of approximately 36% was prepared by blending polycarbonate resin with the values listed in Table 2 for the listed narrowband and broadband dyes. This dye formulation was compounded with a polycarbonate resin and injection molded to a 1.1mm thick wafer. The PhCh CE wafer 200 was subsequently over-molded to a SF lens using wafer technology. A photochromic coating was then applied to the SF lens. The lens was then surfaced to a plano and hard coated.

**Table 2**

| Dye | | Concentration (ppm) | Primary $\lambda$max | FWHM | Total Area (TA) | Residual Area (RA) | RA/TA |
|---|---|---|---|---|---|---|---|
| Narrow band | Epolight 5841 | 32 | 498 nm | 34 nm | 43 | 16 | 0.38 |
| | Epolight 5819 | 31 | 585 nm | 20 nm | 30 | 14 | 0.47 |
| Broad band (used to balance the color) | Solvent Orange 60 | 6 | 452 nm | 108 nm | 103 | 15 | 0.14 |
| | Solvent Violet 36 | 6 | 561nm | 120 nm | 128 | 31 | 0.24 |
| | Solvent Green 3 | 53 | 647 nm | 124 nm | 161 | 57 | 0.36 |

The FWHM (identical with the term "bandwidth" used throughout this description), gives the width of the dyes' extinction peak at half maximum. The total area (TA) and the residual area (RA) can be given as:

$$\text{Total Area (TA)} = \sum_{380}^{780} \frac{E_\lambda}{E_{max}} ; \quad \text{Residual Area (RA)} = \sum_{380}^{A-1} \frac{E_\lambda}{E_{max}} + \sum_{B+1}^{780} \frac{E_\lambda}{E_{max}} ;$$

and Dye Absorbance Area Ratio = RA / TA
Where:

$E_{max}$ = Dyes' extinction at $\lambda_{max}$,

$E_\lambda$ = Dyes' extinction at $\lambda$,

A = Wavelength where the extinction peak crosses 0.5 x $E_{max}$ to the left of $\lambda_{max}$, and

B = Wavelength where the extinction curve crosses 0.5 x $E_{max}$ to the right of $\lambda_{max}$.

The extinction of the dye at a particular wavelength can be given as:

$$\text{Extinction at } \lambda = \frac{ABS_{std} - ABS_{ctrl}}{ppm \times t}$$

Where:

ABS$_{std}$ = absorbance of a lens standard at $\lambda$ made with the dye,

ABS$_{ctrl}$ = absorbance of a lens control at $\lambda$ made without the dye,

ppm = concentration of dye in the standard lens, and

t = thickness of standard and control lens (must be equal)

The FWHM and Total Area metrics can be used to define if a dye is narrow or broad. The Residual Area metric can be used to understand how much residual absorbance a dye will have in light regions other than intended. Increased amounts of color balancing dyes can be included as the Residual Area relative to the Total Area (RA/TA) increases (thereby reducing to unactivated %Tv). This relationship can be understood by observing the narrowband dye properties used for Example 6 versus Example 5a and 5b.

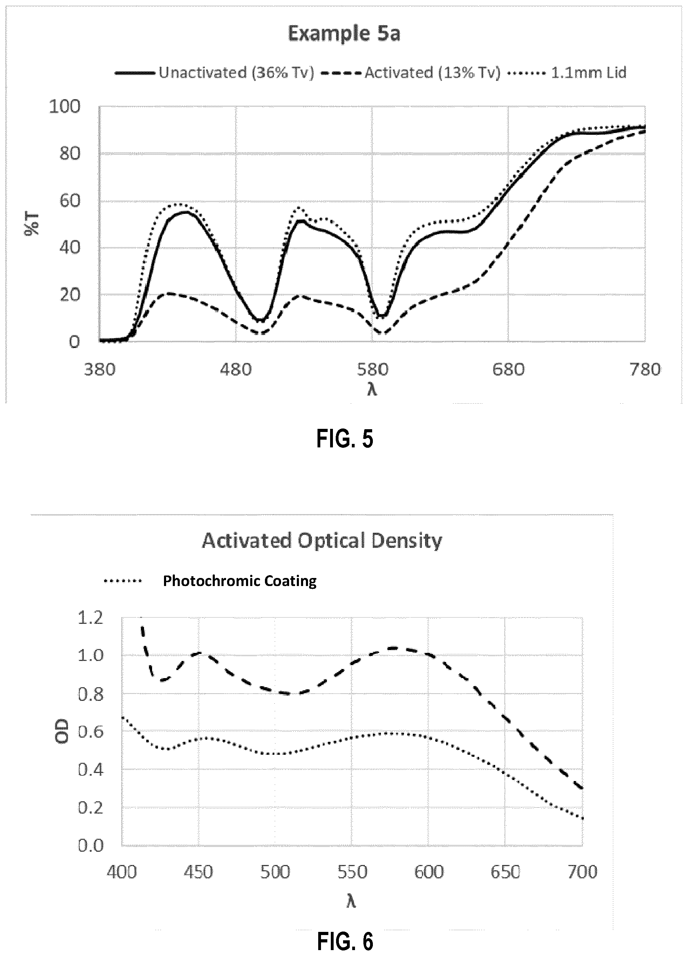

FIG. 5 shows a transmission spectrum for the composite lens fabricated using the PhCh CE wafer 200 according to Example 5a, within the scope of the present disclosure. The transmission spectra of the unactivated and activated lens together with the PhCh CE wafer 200 are shown. Table 3 lists the properties of the composite lens. Note that L, a*, and b* of the CIE 1976 Lab color space can define L for lightness from black (0) to white (100), a* from green (-) to red (+), and b* from blue (-) to yellow (+). For example, the CIE 1976 Lab color space can be modeled using illuminant D65 and a 10 degree observer.

**Table3**

| Example 5a - Hard coated | | | | |
|---|---|---|---|---|
| | Photochromic Coating on Clear lens | | Photochromic Coating on Color Enhancing Lens | |
| | Unactivated | Activated | Unactivated | Activated |
| T498 / Tv | 1.04 | 1.14 | 0.26 | 0.28 |
| T585 / Tv | 0.97 | 0.90 | 0.31 | 0.29 |
| T440 / Tv | 1.03 | 1.00 | 1.51 | 1.47 |
| T540 / Tv | 1.01 | 0.98 | 1.32 | 1.28 |
| T640 / Tv | 1.00 | 1.30 | 1.29 | 1.61 |
| %Tv | 82% | 26% | 36% | 13% |
| L | 92.4 | 57.9 | 66.2 | 43.1 |
| a* | -3.4 | -0.2 | 5.4 | 6.7 |
| b* | 1.8 | 1.6 | -8.2 | -5.4 |
| %ΔC20K$_{avg}$ (from no filter) | -------- | 3% | -------- | 13% |
| %ΔC100$_{avg}$ (from no filter) | -0.5% | -------- | 8% | -------- |

FIG. 6 shows a graph of the activated optical density for the photochromic coating, within the scope of the present disclosure. The composite lens was fabricated using a lower optical density (OD) photochromic coating when activated to stay within specification for driving and to preserve the color enhancing properties of the composite lens. Note that OD here is synonymous with the extinction profile for the activated photochromic layer. It is obtained by calculating the absorbance at each wavelength of a standard lens with activated photochromic coating minus the absorbance at each wavelength of the same control lens without a photochromic coating. The extinction profile of the PhCh coating should be very broad and as flat as possible between the wavelengths of 450 nm to 600 nm. One way to define this flatness is to take the percentage change of the maximum from the minimum optical density between 450 nm and 600 nm. The change in OD for the PhCh coating used in Example 5a can be given as:

$$\%\Delta OD \text{ (max from min) between 450 to 650 nm} = 22\%$$

In addition, the OD should tapper down to zero from about 600 nm to 780 nm in order to maximize the amount of red light transmission. This will increase the color enhancement of red colors. Note, again, that it is desired for the primary colors to transmit through the lens. To do this, the OD at 600 nm can be defined relative to 630 nm, 670 nm, 730 nm, and 780 nm. This can be given as:

$$\frac{OD_{630nm}}{OD_{600nm}} = 0.82; \quad \frac{OD_{670nm}}{OD_{600nm}} = 0.47; \quad \frac{OD_{730nm}}{OD_{600nm}} = 0.10;$$

$$\frac{OD_{780nm}}{OD_{600nm}} = 0.00$$

EXAMPLE 5b - Predetermined dyes can be used to generate a PhCh CE wafer 200 from category 1 to category 3 by sacrificing the color enhancement slightly. Properties of this composite lens include said PhCh CE wafer 200 are shown below in Table 4 and Table 5 with the same photochromic coating used for Example 5a:

**Table 4**

| Example 5b Dyes | | Concentration (ppm) |
|---|---|---|
| Narrow band | Epolight 5841 | 26 |
| | Epolight 5819 | 27 |
| Broad band | Solvent Green 3 | 42 |

**Table 5**

| Example 5b - Hard coated | | | | |
|---|---|---|---|---|
| | Photochromic Coating on Clear lens | | Photochromic Coating on Color Enhancing Lens | |
| | Unactivated | Activated | Unactivated | Activated |
| T498 / Tv | 1.04 | 1.14 | 0.30 | 0.33 |
| T585 / Tv | 0.97 | 0.90 | 0.30 | 0.28 |
| T440 / Tv | 1.03 | 1.00 | 1.44 | 1.39 |
| T540 / Tv | 1.01 | 0.98 | 1.28 | 1.24 |
| T640 / Tv | 1.00 | 1.30 | 1.23 | 1.59 |
| %Tv | 82% | 26% | 44% | 14% |
| L | 92.4 | 57.9 | 71.8 | 43.9 |
| a* | -3.4 | -0.2 | 4.2 | 6.1 |
| b* | 1.8 | 1.6 | -7.2 | -4.5 |
| %$\Delta$C20K$_{avg}$ (from no filter) | -------- | 3% | -------- | 12% |
| %$\Delta$C100$_{avg}$ (from no filter) | -0.5% | -------- | 7% | -------- |

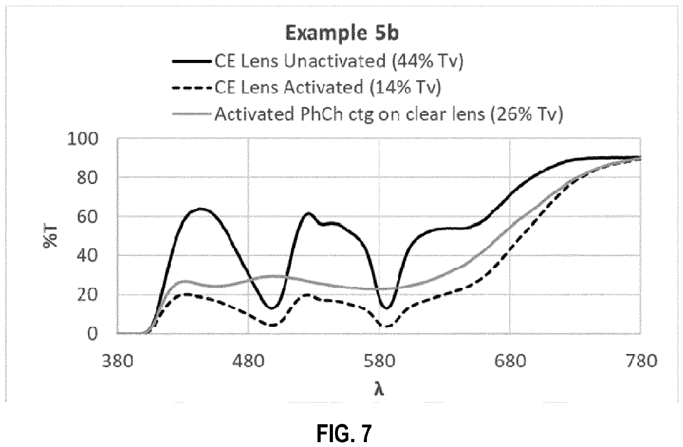

FIG. 7 shows a transmission spectrum for the composite lens fabricated using the PhCh CE wafer 200 according to Example 5b, within the scope of the present disclosure.

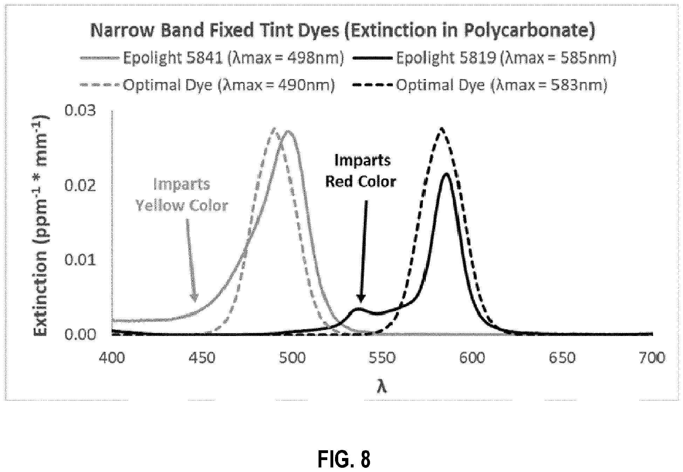

EXAMPLE 6 - The fixed tint narrow band dyes used to make the PhCh CE wafer 200 of Example 5a and 5b imparted residual color on the lens. For this reason, additional color balancing dyes were included to neutralize the color. Addition of the color balancing dyes can cause the unactivated total transmission to be lower than what could be possible if optimal narrow band dyes were used instead. For example, two narrow band dyes were simulated to not impart the extra residual color. The extinction profile for these optimal simulated dyes are shown in FIG. 8 and compared with the actual narrow band dyes used to make the prototype of Example 5a. The graph shows that Epolight 5819 has a secondary peak near 540 nm that imparts a residual red color on the PhCh CE wafer 200, and Epolight 5841 has a tail that imparts a residual yellow color on the PhCh CE wafer 200. Solvent green 3 is one example of a broad band dye that can neutralize these residual colors. Example 6 is a simulation using these optimal dyes to show an improvement to the properties of the PhCh CE wafer 200.

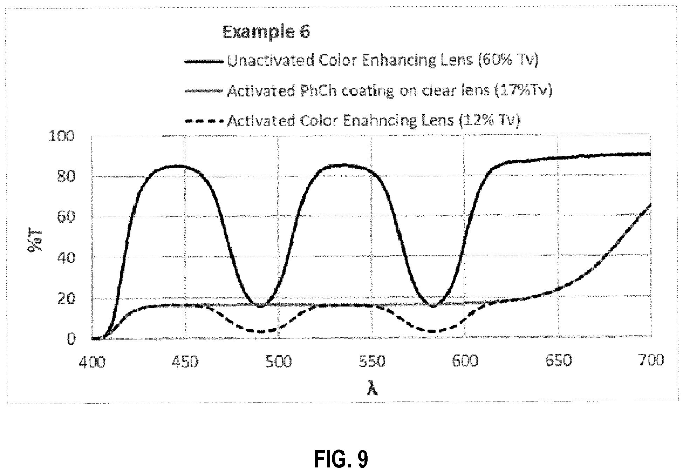

FIG. 9 shows a transmission spectrum for the composite lens fabricated using the PhCh CE wafer 200 according to Example 6, according to an embodiment of the present disclosure. Tables 6 and 7 describe the properties of the PhCh CE wafer 200 according to Example 6.

**Table 6**

| Example 6 Dyes | | Primary λmax | FWHM | Total Area (TA) | Residual Area (RA) | RA / TA |
|---|---|---|---|---|---|---|
| Narrow band | CE dye 1 | 490 nm | 28 | 29 | 6 | 0.22 |
| | CE dye 2 | 583 nm | 28 | 29 | 6 | 0.22 |
| Broad band | None Required | | | | | |

**Table 7**

| Example 6 Properties (lens with hard coat) | | | | |
|---|---|---|---|---|
| | Photochromic Layer on Clear lens | | Photochromic Layer on Color Enhancing Lens | |
| | Unactivated | Activated | Unactivated | Activated |
| T490/ Tv | 1.00 | 0.98 | 0.26 | 0.25 |
| T583 / Tv | 0.99 | 0.98 | 0.25 | 0.25 |
| T440 / Tv | 0.99 | 0.98 | 1.40 | 1.37 |
| T540 / Tv | 1.00 | 0.97 | 1.40 | 1.35 |
| T640 / Tv | 1.02 | 1.22 | 1.45 | 1.72 |
| %Tv | 85.4% | 16.9% | 60.2% | 12.0% |
| L | 94.0 | 48.1 | 81.4 | 40.9 |
| a* | -2.0 | 2.5 | 4.1 | 6.7 |
| b* | 4.5 | 2.5 | -6.7 | -3.9 |
| %$\Delta$C20K$_{avg}$ (from no filter) | -------- | 2.7% | -------- | 15.3% |
| %$\Delta$C100$_{avg}$ (from no filter) | -0.4% | -------- | 11.0% | -------- |

These theoretical narrowband dyes had lower RA/TA values compared to the narrowband dyes of Examples 5a and 5b. This eliminates the need for broadband color balancing dyes to neutralize the adulterating color.

Photochromic layer properties:

$$\%\Delta OD \text{ (max from min) between 450 to 650 nm} = 2\%$$

$$\frac{OD_{630nm}}{OD_{600nm}} = 0.94; \quad \frac{OD_{670nm}}{OD_{600nm}} = 0.58; \quad \frac{OD_{730nm}}{OD_{600nm}} = 0.04; \quad \frac{OD_{780nm}}{OD_{600nm}} = 0.00$$

The correlate of Chroma (C) for each object color is in essence normalized to the lightness of the filter. For instance, a 10%Tv lens will result in the same change in Chroma if compared to no filter or a flat line filter at 10%Tv. This can make Chroma an impractical measure for evaluating how colors are perceived for variable transmission lenses when the light levels cause change in activation. Instead, the CIECAM02 model also calculates a correlate of Colorfulness (M), which in essence takes into account the actual brightness of the color. Chroma (C) and Colorfulness (M) for low light (100 Lux) are tabulated below in Table 8 for all the examples compared to a non-variable transmission color-enhancing lens.

**Table 8**

| Filter | % Tv at 0% Activation | Change from No Filter | | Overall Enhancement (1) + (2) |
|---|---|---|---|---|
| | | (1) %ΔC100$_{avg}$ | (2) %ΔM100$_{avg}$ | |
| Non-Variable transmission Color Enhancing Lens | 11% | 10% | -8% | 2% |
| Example 1a | 88% | 0% | -2% | -2% |
| Example 1b | 81% | 2% | 0% | 2% |
| Example 2 | 88% | 0% | -2% | -2% |
| Example 3 | 14% | -4% | -18% | -22% |
| Example 4 | 65% | 10% | 6% | 16% |
| Example 5a | 36% | 8% | -1% | 7% |
| Example 5b | 44% | 7% | 0% | 7% |
| Example 6 | 60% | 11% | 6% | 17% |

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details, and combined in any permutation. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than the described embodiment. Various additional operations may be performed and/or described operations may be omitted in additional embodiments.

Those skilled in the art will also understand that there can be many variations made to the operations of the techniques explained above while still achieving the same objectives of the invention. Such variations are intended to be covered by the scope of this disclosure. As such, the foregoing descriptions of embodiments of the invention are not intended to be limiting. Rather, any limitations to embodiments of the invention are presented in the following claims.

Embodiments of the present disclosure may also be as set forth in the following parentheticals.

(1) A light filtering element, comprising: at least one layer, e.g., one, two, three, four, five, or more layers, including a first narrowband dye, the first narrowband dye including a first narrowband dye peak absorbance wavelength with a first narrowband dye bandwidth and a first narrowband dye absorbance area ratio, and a first broadband dye, the first broadband dye including a first broadband dye peak absorbance wavelength with a first broadband dye bandwidth and a first broadband dye absorbance area ratio, wherein the first narrowband dye is a photochromic dye and/or a fixed tint dye, and the first broadband dye is a photochromic dye and/or a fixed tint dye.

(2) The element of (1), wherein the first narrowband dye peak absorbance wavelength is approximately 498 nm, the first narrowband dye bandwidth is less than 70, 60, 50, or 40 nm, and the first narrowband dye absorbance area ratio is less than or equal to approximately 0.5, 0.45, 0.4, or 0.35.

(3) The element of either (1) or (2), wherein the at least one layer includes a second narrowband dye, the second narrowband dye including a second narrowband dye peak absorbance wavelength with a second narrowband dye bandwidth and a second narrowband dye absorbance area ratio.

(4) The element of any one of (1) to (3), wherein the second narrowband dye peak absorbance wavelength is in the range of 560 to 600, 565 to 595, 570 to 590, 580 to 590, or approximately 585 nm ; the second narrowband dye bandwidth is less than 70, 60, 50, or 40 nm; and the second narrowband dye absorbance area ratio is less than or equal to 0.9, 0.8, 0.75, or 0.5.

(5) The element of any one of (1) to (4), further comprising: a lens optically integrated with the at least one layer.

(6) The element of any one of (1) to (5), wherein the at least one layer and the lens are attached to one another via an adhesive.

(7) The element of any one of (1) to (5), wherein the at least one layer and the lens are attached to one another via injection molding.

(8) The element of any one of (1) to (7), wherein when the first narrowband dye or the first broadband dye is a photochromic dye, the photochromic dye is configured to adjust a transmission of the at least one layer between at least two transmission states in response to a change in detected luminance, a first transmission state of the at least two transmission states includes a first transmission value, a second transmission state of the at least two transmission states includes a second transmission value, the second transmission value being larger than the first transmission value, in response to a high detected luminance, the at least one layer adjusts to the first transmission state of the at least two transmission states, and in response to a low detected luminance, the at least one layer adjusts to the second transmission state of the at least two transmission states.

(9) The element of any one of (1) to (8), wherein the first transmission value of the first transmission state of the at least two transmission states is in the range of 5 to 30, 6 to 25, 7 to 20, or 8 to 18%.

(10) The element of any one of (1) to (8), wherein when the first narrowband dye is a fixed tint dye, the second transmission value of the second transmission state of the at least two transmission states is in the range of 10 to 80, 15 to 75, 17.5 to 70, or 20 to 65%, and/or when the first narrowband dye is a photochromic dye, the second transmission value of the second transmission state of the at least two transmission states is in the range of 10 to 99, 15 to 98, 17.5 to 95, or 20 to 90%.

(11) The element of any one of (1) to (8), wherein the first narrowband dye includes a first narrowband dye peak transmission, and a ratio of the first narrowband dye peak transmission to the first transmission value is in the range of 0.0 to 1.0, 0.0 to 0.9, 0.0 to 0.75, or 0.0 to 0.6.

(12) The element of any one of (1) to (8), wherein the first narrowband dye includes a first narrowband dye peak transmission, when the first narrowband dye is a fixed tint dye, a ratio of the first narrowband dye peak transmission to the second transmission value is in the range of 0.0 to 0.6, and/or when the first narrowband dye is a photochromic dye, a ratio of the first narrowband dye peak transmission to the second transmission value is in the range of 0.5 to 1.2, or 0.8 to 1.1, or 0.9 to 1.0.

(13) The element of any one of (1) to (12), wherein the at least one layer includes a first layer and a second layer, the first layer of the at least one layer includes the first narrowband dye, the second layer of the at least one layer includes the first broadband dye; and the second layer is optically integrated with the first layer, and when the first broadband dye is a photochromic dye, the second layer is configured to adjust the transmission of the second layer between the at least two transmission states.

(14) The element of (13), wherein the second layer is a coating and/or a thermoplastic.

(15) The element of (14), further comprising: a lens optically integrated with the at least one layer.

**Claims**

1. A light filtering element, comprising:

   at least one layer, including
   a first narrowband dye, the first narrowband dye including a first narrowband dye peak absorbance wavelength with a first narrowband dye bandwidth and a first narrowband dye absorbance area ratio; and
   a first broadband dye, the first broadband dye including a first broadband dye peak absorbance wavelength with a first broadband dye bandwidth and a first broadband dye absorbance area ratio, wherein
   the first narrowband dye is a photochromic dye and/or a fixed tint dye, and
   the first broadband dye is a photochromic dye and/or a fixed tint dye.

2. The light filtering element of claim 1, wherein
   the first narrowband dye peak absorbance wavelength is approximately 498 nm,
   the first narrowband dye bandwidth is less than 70 nm, and
   the first narrowband dye absorbance area ratio is less than or equal to approximately 0.50.

3. The light filtering element of any one of the previous claims, wherein
   the at least one layer includes a second narrowband dye, the second narrowband dye including a second narrowband dye peak absorbance wavelength with a second narrowband dye bandwidth and a second narrowband dye absorbance area ratio.

4. The light filtering element of claim 3, wherein
the second narrowband dye peak absorbance wavelength is approximately 585 nm,
the second narrowband dye bandwidth is less than 70 nm, and
the second narrowband dye absorbance area ratio is less than or equal to approximately 0.50.

5. The light filtering element of any one of the previous claims, further comprising:
a lens optically integrated with the at least one layer.

6. The light filtering element of claim 5, wherein the at least one layer and the lens are attached to one another via an adhesive.

7. The light filtering element of claim 5, wherein the at least one layer and the lens are attached to one another via injection molding.

8. The light filtering element of any one of the previous claims, wherein
when the first narrowband dye or the first broadband dye is a photochromic dye, the photochromic dye is configured to adjust a transmission of the at least one layer between at least two transmission states in response to a change in detected luminance,
a first transmission state of the at least two transmission states includes a first transmission value,
a second transmission state of the at least two transmission states includes a second transmission value, the second transmission value being larger than the first transmission value,
in response to a high detected luminance, the at least one layer adjusts to the first transmission state of the at least two transmission states, and
in response to a low detected luminance, the at least one layer adjusts to the second transmission state of the at least two transmission states.

9. The light filtering element of claim 8, wherein
the first transmission value of the first transmission state of the at least two transmission states is in the range of 8% to 18%.

10. The light filtering element of claim 8 or 9, wherein
when the first narrowband dye is a fixed tint dye, the second transmission value of the second transmission state of the at least two transmission states is in the range of 20% to 65%, and/or when the first narrowband dye is a photochromic dye, the second transmission value of the second transmission state of the at least two transmission states is in the range of 20% to 90%.

11. The light filtering element of any one of claims 8 to 10, wherein
the first narrowband dye includes a first narrowband dye peak transmission, and
a ratio of the first narrowband dye peak transmission to the first transmission value is in the range of 0.0 to 0.6.

12. The light filtering element of any one of claims 8 to 11, wherein
the first narrowband dye includes a first narrowband dye peak transmission,
when the first narrowband dye is a fixed tint dye, a ratio of the first narrowband dye peak transmission to the second transmission value is in the range of 0.0 to 0.6, and/or
when the first narrowband dye is a photochromic dye, a ratio of the first narrowband dye peak transmission to the second transmission value is in the range of 0.5 to 1.2.

13. The light filtering element of any one of the previous claims, wherein
the at least one layer includes a first layer and a second layer,
the first layer of the at least one layer includes the first narrowband dye,
the second layer of the at least one layer includes the first broadband dye,
the second layer is optically integrated with the first layer, and
when the first broadband dye is a photochromic dye, the second layer is configured to adjust the transmission of the second layer between the at least two transmission states.

14. The light filtering element of claim 13, wherein the second layer is a coating and/or a thermoplastic.

**15.** The light filtering element of any one of the previous claims, further comprising:
a lens optically integrated with the at least one layer.

I. Close Mold

II. Inject Molten Dye Blended Thermoplastic

III. Eject Injected CE Wafer

Cooling

**FIG. 1A**

I.Open Mold

II.Insert CE Wafer

III.Close Mold

IV.Inject Molten Clear PC; Fuse-
Bonded to the Wafer

Cooling

V.Eject Lens

**FIG. 1B**

EP 3 971 635 A1

200a — PhCh TPU — CE PC — Photochromic CE Wafer by Film Lamination — Clear PC — Adhesive

200b — CE PC — PhCh TPU — Photochromic CE Wafer by Film Lamination — Adhesive — Clear PC

200c — PhCh & CE TPU — Clear PC — Photochromic CE Wafer by Film Lamination — Clear PC — Adhesive

200d — PhCh TPU — CE PC — Photochromic CE Wafer by Coextrusion or Extrusion Lamination — Clear PC

200e — CE PC — PhCh TPU — Photochromic CE Wafer by Coextrusion or Extrusion Lamination — Clear PC

200f — PhCh TAC — CE PC — Photochromic CE Wafer by Solvent Casting — Adhesive

200g — PhCh & CE TAC — Photochromic CE Wafer by Solvent Casting — Adhesive — Clear PC

200h — PhCh TPU — Clear PC — Photochromic CE Wafer by Injection Overmolding — Clear PC — Adhesive — CE PC

**FIG. 2**

**Process Flow for Making Photochromic CE Lens**

FIG. 3

FIG. 4A

FIG. 4B

FIG. 4C

FIG. 4D

FIG. 4E

## Example 5a

— Unactivated (36% Tv) — — — Activated (13% Tv) ······· 1.1mm Lid

**FIG. 5**

## Activated Optical Density

······· **Photochromic Coating**

**FIG. 6**

FIG. 7

**Narrow Band Fixed Tint Dyes (Extinction in Polycarbonate)**

FIG. 8

FIG. 9

Europäisches
Patentamt

European
Patent Office

Office européen
des brevets

# EUROPEAN SEARCH REPORT

Application Number

EP 20 30 6063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/255051 A1 (MCCABE BROCK SCOTT [US] ET AL) 20 October 2011 (2011-10-20)<br>* figures 1A, 1B, 21 *<br>* abstract *<br>* paragraphs [0001], [0007], [0008], [0020], [0102], [0108], [0110], [0011], [0121] * | 1-15 | INV.<br>G02C7/10<br>G02C7/02<br>G02B5/23<br>G02B5/22 |
| A | US 2013/271725 A1 (CHIOU MICHAEL [TW] ET AL) 17 October 2013 (2013-10-17)<br>* the whole document * | 1-15 | |
| A | WO 2019/238648 A1 (ESSILOR INT [FR]) 19 December 2019 (2019-12-19)<br>* the whole document * | 1-15 | |
|  |  |  | TECHNICAL FIELDS SEARCHED (IPC) |
|  |  |  | G02C<br>G02B |

The present search report has been drawn up for all claims

| Place of search | Date of completion of the search | Examiner |
|---|---|---|
| Munich | 16 March 2021 | Gentile, Mathieu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 30 6063

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2021

| Patent document cited in search report | Publication date | Patent family member(s) | Publication date |
|---|---|---|---|
| US 2011255051 A1 | 20-10-2011 | AU 2011240610 A1 | 08-11-2012 |
| | | BR 112012025855 A2 | 13-08-2019 |
| | | CA 2796235 A1 | 20-10-2011 |
| | | CN 102947680 A | 27-02-2013 |
| | | EP 2561321 A1 | 27-02-2013 |
| | | JP 6025709 B2 | 16-11-2016 |
| | | JP 6400653 B2 | 03-10-2018 |
| | | JP 2013524300 A | 17-06-2013 |
| | | JP 2017033012 A | 09-02-2017 |
| | | SG 184840 A1 | 29-11-2012 |
| | | US 2011255051 A1 | 20-10-2011 |
| | | US 2015022777 A1 | 22-01-2015 |
| | | US 2017068113 A1 | 09-03-2017 |
| | | US 2020081271 A1 | 12-03-2020 |
| | | WO 2011130314 A1 | 20-10-2011 |
| US 2013271725 A1 | 17-10-2013 | TW 201341886 A | 16-10-2013 |
| | | US 2013271725 A1 | 17-10-2013 |
| WO 2019238648 A1 | 19-12-2019 | BR 112020024152 A2 | 02-03-2021 |
| | | CA 3103553 A1 | 19-12-2019 |
| | | CN 112236718 A | 15-01-2021 |
| | | KR 20210019419 A | 22-02-2021 |
| | | WO 2019238648 A1 | 19-12-2019 |

EPO FORM P0459

For more details about this annex : see Official Journal of the European Patent Office, No. 12/82